# EUROPÄISCHE PATENTSCHRIFT

(11) **EP 3 771 388 B1**
(45) Veröffentlichungstag und Bekanntmachung des Hinweises auf die Patenterteilung: **16.11.2022**
(21) Anmeldenummer: 20183673.1
(22) Anmeldetag: 02.07.2020
(51) Int. Cl.: A47J 43/08

(54) **MULTIFUNKTIONSKOCHGERÄT**
MULTIFUNCTION COOKING APPLIANCE
APPAREIL DE CUISSON MULTIFONCTION

(30) Priorität: 30.07.2019 DE 102019211308
(43) Veröffentlichungstag der Anmeldung: 03.02.2021
(73) Patentinhaber: BSH Hausgeräte GmbH, 81739 München (DE)
(72) Erfinder: Cresnar, Mihael, 3205 Vitanje (SI); Rudez, Darko, 3230 Sentjur (SI); Kick, Bernhard, 83301 Traunreut (DE)

(56) Entgegenhaltungen:
- EP-A1- 2 648 583
- DE-A1-102018 119 811
- RU-C2- 2 611 984

## Beschreibung

Die Erfindung betrifft ein Multifunktionskochgerät mit einem Kochbehälter, wobei eine metallische Welle durch einen Schichtboden des Kochbehälters geführt ist und an einem in Richtung einer Öffnung des Kochbehälters weisenden ersten Endabschnitt der metallischen Welle eine Kopplungsgeometrie vorgesehen ist, die zur Herstellung einer lösbaren und drehfesten Verbindung mit einer Vielzahl von austauschbaren Aufsätzen unterschiedlicher Art zur Bearbeitung von Nahrungsmitteln ausgebildet ist und die metallische Welle in einer mindestens zwei Lagerstellen aufweisenden Lagereinheit drehbar und gedichtet aufgenommen ist, wobei die Lagereinheit in einer zentrischen Aussparung einer becherartigen Vertiefung des Schichtbodens mittels einer Verriegelungsmutter befestigbar ist und an einem zweiten, von dem ersten Endabschnitt weggerichteten Endabschnitt der metallischen Welle eine Eingriffsgeometrie zum drehenden Antrieb durch eine elektrische Antriebseinheit ausgebildet ist.

Aus dem Stand der Technik sind multifunktionale Kochgeräte zur Zubereitung von Speisen bekannt. Bei diesen Geräten können die für die Zubereitung einer Speise benötigten Zutaten in einen elektrisch beheizbaren Behälter eingegeben werden, der innenseitig über eine zentrisch angeordnete und drehend antreibbare Welle mit einem endseitigen Kopplungsmechanismus verfügt. Der Kopplungsmechanismus ist mit einer Vielzahl von unterschiedlichsten Aufsätzen zur Bearbeitung von Nahrungsmitteln koppelbar. Hierbei können beispielsweise Rühraufsätze, Knetaufsätze, Schlagaufsätze, Hack- und Schneidaufsätze sowie Passieraufsätze und vieles mehr zum Einsatz kommen. Die Welle ist durch den Boden des beheizbaren Behälters geführt, abgedichtet und mittels einer geeigneten Eingriffsgeometrie von einem elektrischen Antriebsmotor des multifunktionalen Kochgeräts rotierend antreibbar. Die Lagesicherung der Welle innerhalb des Bodens des Kochbehälters erfolgt mittels eines geeigneten Verriegelungsmechanismus.

DE 10 2018 119811 A1, RU 2 611 984 C2, EP 2 648 583 A1 zeigen Kochgeräte aus dem Stand der Technik.

Um die Reinigung eines derartigen multifunktionalen Kochgerätes zu vereinfachen, lassen sich die Welle und der Kochbehälter im Bedarfsfall leicht voneinander trennen. Von Nachteil hierbei ist unter anderem, dass im Zuge der Demontage des multifunktionalen Kochgeräts die Welle und der Kochbehälter nach dem Lösen des Verriegelungsmechanismus unkontrolliert auseinander fallen können.

Eine Aufgabe der Erfindung ist es daher, ein multifunktionales Kochgerät bereitzustellen, bei dem ein verbesserter Demontageprozess, zum Beispiel zu Reinigungszwecken, gegeben ist.

Die eingangs genannte Aufgabe wird dadurch gelöst, dass die Verriegelungsmutter eine Sicherungseinrichtung aufweist, die dazu ausgebildet ist, die Verriegelungsmutter sowie die Lagereinheit nach dem Aufheben eines Verriegelungszustands der Verriegelungsmutter vor einem unkontrollierten Abfallen vom Schichtboden des Kochbehälters zu sichern. Hierdurch wird ein unkontrolliertes Auseinanderfallen von Verriegelungsmutter und Lagereinheit und/oder Kochbehälter im gelösten Zustand zuverlässig verhindert. Infolgedessen wird eine mögliche Beschädigung des Küchenbodens, der Küchenarbeitsplatte oder auch einer Dunstabzugshaube durch das unkontrollierte Herabfallen von konstruktiven Komponenten des Multifunktionskochgeräts zuverlässig verhindert. Zur endgültigen Demontage der Lagereinheit aus dem Kochbehälter muss ein Benutzer die Verriegelungsmutter gegen einen definierten Widerstand der Sicherungseinrichtung axial von der Lagereinheit abziehen.

Vorzugsweise weist die Sicherungseinrichtung mindestens zwei Haken auf, wobei die Haken zum Ermöglichen des endgültigen axialen Abziehens der Verriegelungsmutter von der Lagereinheit radial nach außen elastisch federnd ausgebildet sind. Hierdurch ist vom Benutzer bei der Demontage lediglich eine moderate und definierte Abziehkraft aufzubringen.

Bei einer technisch vorteilhaften Ausgestaltung hintergreift jeder Haken in einem Haltezustand der Verriegelungsmutter jeweils einen radial auswärts gerichteten Vorsprung der Lagereinheit.

Hierdurch können die Lagereinheit und die Verriegelungsmutter bei der Demontage des Multifunktionskochgeräts nicht unkontrolliert auseinanderfallen. Die Vorsprünge an der Lagereinheit können jeweils eine in Umfangsrichtung verlaufende Anschrägung aufweisen, die dazu ausgebildet ist, das Aufgleiten der Haken beim Übergang vom Verriegelungszustand in den Entriegelungszustand der Verriegelungsmutter zu erleichtern. In einem Verriegelungszustand der Verriegelungsmutter besteht eine feste mechanische Verbindung zwischen der Lagereinheit, dem Kochbehälter und der Verriegelungsmutter. Im Entriegelungszustand sind die Lagereinheit und die Verriegelungseinheit entriegelt und lassen sich in axialer Richtung praktisch widerstandsfrei so weit auseinander bewegen, bis der Haltezustand erreicht ist, in dem die Verriegelungsmutter erst nach dem Überwinden einer definierten mechanischen Haltekraft der die Sicherungseinrichtung bildenden Haken endgültig von der Lagereinheit in axialer Richtung abziehbar ist.

Bevorzugt weisen die mindestens zwei Haken jeweils einen radial einwärts orientierten keilförmigen Rastvorsprung auf. Hierdurch ist ein sicherer Halt der gelösten Verriegelungsmutter an der Lagereinheit gewährleistet.

Im Fall einer weiteren Ausgestaltung weist ein radial auswärts gerichteter Kragen der Verriegelungsmutter eine radial auswärts offene und der Lagereinheit zugewandte Ringnut auf, in der eine Wellenfeder angeordnet ist. Hierdurch ist eine zuverlässige Lagesicherung der Wellenfeder an der Verriegelungsmutter gewährleistet.

Vorzugsweise ist die Wellenfeder in einem Verriegelungszustand der Verriegelungsmutter axial vorgespannt und stützt sich zwischen der Ringnut des Kragens und einer die becherartige Vertiefung koaxial umschließenden Schulter des Schichtbodens ab. Hierdurch ist eine geräuscharme Befestigung der Lagereinheit in dem Kochbehälter möglich. Darüber hinaus ist im gelösten Zustand der Verriegelungsmutter aufgrund der axialen Vorspannung der Wellenfeder (noch) eine definierte Lage der Verriegelungsmutter sichergestellt.

Bei einer günstigen Weiterbildung sind die Lagereinheit und die Verriegelungsmutter mittels einer Bajonettverbindung miteinander verbindbar. Hierdurch ist ein schnelles, leichtes und sicheres Verriegeln und Entriegeln von der Lagereinheit und der Verriegelungsmutter, zum Beispiel zu Reinigungs- oder Wartungszwecken des Multifunktionskochgeräts, gegeben.

Vorzugsweise weist die Verriegelungsmutter zwei zueinander diametrale sowie bogenförmige Haltenuten zur Aufnahme der Vorsprünge der Lagereinheit auf. Hierdurch ist ein hinreichend sicherer Halt der Verriegelungsmutter im Verriegelungszustand gewährleistet.

Bei einer weiteren technisch vorteilhaften Fortbildung ist die Lagereinheit bevorzugterweise verdrehsicher in der Aussparung im Schichtboden des Kochbehälters aufgenommen. Hierdurch wird ein Mitdrehen der Lagereinheit beim Schließen der Bajonettverbindung durch das Verdrehen der Verriegelungsmutter vermieden. Zu diesem Zweck sind die Aussparung im Schichtboden und eine Außenkontur der Lagereinheit in diesem Bereich entsprechend geometrisch, beispielsweise mit einer abschnittsweisen vierkantigen Umfangsgeometrie, gestaltet.

Bei einer vorteilhaften Weiterbildung sind an der Verriegelungsmutter mindestens zwei Betätigungsorgane, insbesondere zwei radial auswärts gerichtete Betätigungsflügel, zur dreh- und schiebeweisen Betätigung der Verriegelungsmutter, integral ausgeformt. Infolgedessen ist eine besonders ergonomische Betätigung der Verriegelungsmutter gegeben. Vorzugsweise weisen die mindestens zwei Betätigungsorgane jeweils eine Geometrie auf, die der eines gleichseitigen Dreiecks entspricht. Aufgrund der flügelartig vergrößerten Betätigungsorgane kann ein Benutzer ein vergleichsweise hohes Drehmoment zum Übergang vom Entriegelungszustand in den Verriegelungszustand aufbringen.

Bevorzugt ist die Kopplungsgeometrie im Bereich des ersten Endabschnitts der metallischen Welle mit einem Kunststoff gebildet.

Hierdurch lassen sich auch geometrisch komplexe Kopplungsgeometrien zur Optimierung der Drehmomentübertragung, Spielfreiheit und Haltbarkeit besonders kostengünstig fertigen.

Im Folgenden wird ein bevorzugtes Ausführungsbeispiel der Erfindung anhand von schematischen Figuren näher erläutert. Es zeigen
- Figur 1: eine stark vereinfachte Darstellung eines erfindungsgemäßen Multifunktionskochgeräts,
- Figur 2: eine perspektivische Ansicht einer Lagereinheit mit aufgeschobener Verriegelungsmutter des Multifunktionskochgeräts von Fig. 1,
- Figur 3: einen Längsschnitt durch das Multifunktionskochgerät von Fig. 1 im Bereich des Ausschnitts II in einem Verriegelungszustand,
- Figur 4: einen Längsschnitt durch das Multifunktionskochgerät von Fig. 1 im Bereich des Ausschnitts II in einem Entriegelungszustand,
- Figur 5: einen Längsschnitt durch das Multifunktionskochgerät von Fig. 1 im Bereich des Ausschnitts II in einem Haltezustand,
- Figur 6: eine Draufsicht auf die Verriegelungsmutter im Verriegelungszustand von Fig. 3, und
- Figur 7: eine Draufsicht auf die Verriegelungsmutter im Entriegelungs- bzw. Haltezustand von Fig. 4, 5.

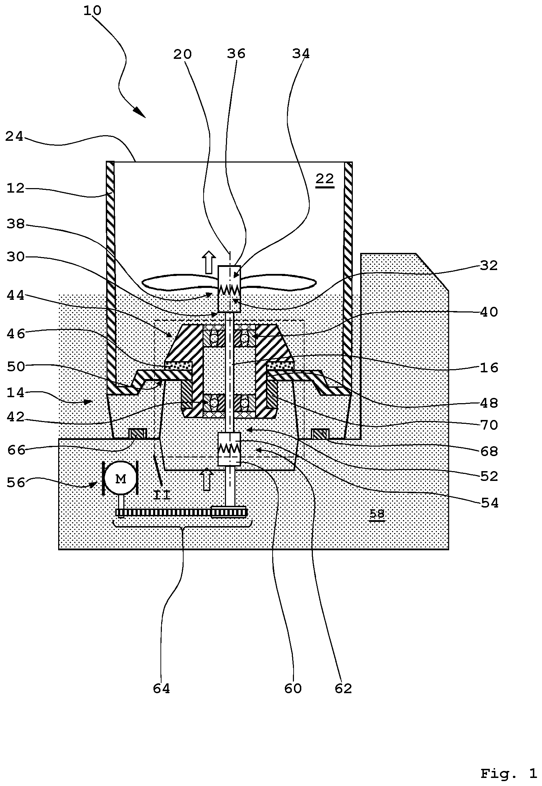

Die Figur 1 illustriert eine stark vereinfachte Darstellung eines erfindungsgemäßen Multifunktionskochgeräts. Das erfindungsgemäße Multifunktionskochgerät 10 umfasst unter anderem einen bevorzugt beheizbaren, metallischen sowie abnehmbaren Kochbehälter 12 mit einem Schichtboden 14, durch den eine metallische Welle 16 geführt ist, die eine Längsmittelachse 20 aufweist. Der topfförmige Kochbehälter 12 des Multifunktionskochgeräts 10 verfügt über einen näherungsweise zylindrischen Innenraum 22 mit einer kreisrunden, oberseitigen Öffnung 24 zum Eingeben von mit Hilfe des Multifunktionskochgeräts zu bearbeitenden, nicht dargestellten Nahrungsmitteln. Der Kochbehälter 12 ist mittels einer bevorzugt im Bereich des Schichtbodens 14 integrierten, nicht dargestellten elektrischen Heizeinrichtung auf zum Kochen bzw. Garen von Nahrungsmitteln notwendige Temperaturen erhitzbar.

An einem ersten, der Öffnung 24 des Kochbehälters 12 zugewandten Endabschnitt 30 der Welle 16 ist eine wellenseitige Kopplungsgeometrie 32 zur Herstellung einer im Bedarfsfall von einem Benutzer leicht wieder lösbaren, drehfesten mechanischen Verbindung mit einer komplementären aufsatzseitigen Kopplungsgeometrie 34 eines austauschbaren Aufsatzes 36 nach Art einer mechanischen Kupplung 38 vorgesehen. Der Aufsatz 36 ist hier lediglich exemplarisch als ein Schlagaufsatz zum Schlagen bzw. Aufschlagen eines Nahrungsmittels, wie zum Beispiel Sahne, Eischnee oder dergleichen ausgeführt. Darüber hinaus können zum Beispiel Rühraufsätze, Knetaufsätze, Hackaufsätze, Häckselaufsätze, Schneidaufsätze, Passieraufsätze, Pürieraufsätze etc. Verwendung finden.

Die Welle 16 ist mit Hilfe von einer ersten und einer zweiten Lagerstelle 40, 42 einer Lagereinheit 44 drehbar und mittels eines Dichtelements 46 gedichtet in einer zentrischen Aussparung 48 des Schichtbodens 14 aufgenommen. Die beiden Lagerstellen 40, 42 sind hier beispielhaft als gedichtete (Rillen-)Kugellager ausgebildet, die der besseren zeichnerischen Übersicht halber nicht mit Bezugsziffern versehen sind.

An einem zweiten Endabschnitt 52 der massiven, metallischen Welle 16 ist eine kronenartige Eingriffsgeometrie 54 zum drehenden Antrieb durch eine elektrische Antriebseinheit 56, insbesondere einen Elektromotor M, vorgesehen. Die elektrische Antriebseinheit 56 ist bevorzugt in ein Gehäuse 58 des Multifunktionskochgeräts 10 integriert. Die Eingriffsgeometrie 54 bildet zusammen mit einer Abtriebsgeometrie 60 eine benutzerseitig leicht trennbare mechanische Kupplung 62 aus, so dass der Kochbehälter 12 im Bedarfsfall von dem Benutzer leicht von dem Gehäuseunterteil 58 des Multifunktionskochgeräts 10 abgehoben werden kann. Die Abtriebsgeometrie 60 ist zu diesem Zweck zumindest bereichsweise komplementär zu der Eingriffsgeometrie 54 an der metallischen Welle 16 ausgebildet. Die Abtriebsgeometrie 60 ist mittels eines mechanischen Getriebes 64 mit der elektrischen Antriebseinheit 56 gekoppelt. Alternativ kann die Abtriebsgeometrie 60 auch direkt durch die elektrische Antriebseinheit 56 drehend angetrieben sein.

Zur Sicherstellung einer ordnungsgemäßen Positionierung des Kochbehälters 12 in Bezug zum Gehäuse 58 weist dieses mindestens zwei zum Beispiel zapfenartige Ausrichtelemente 66, 68 auf, die zumindest bereichsweise formschlüssig in der besseren Übersicht halber nicht bezeichnete, komplementär ausgeformte Vertiefungen innerhalb des Schichtbodens 14 des Kochbehälters 12 einbringbar sind.

Die mechanische Arretierung der Lagereinheit 44 innerhalb der Aussparung 48 der becherartigen Vertiefung 50 des Schichtbodens 14 des Multifunktionskochgeräts 10 erfolgt bevorzugt mittels einer Verriegelungsmutter 70 zur Schaffung einer hier nicht näher dargestellten Bajonettverbindung zwischen der Lagereinheit 44 und der Verriegelungsmutter 70. Die Verriegelungsmutter 70 befindet sich in der Fig. 1 in einem so genannten Verriegelungszustand.

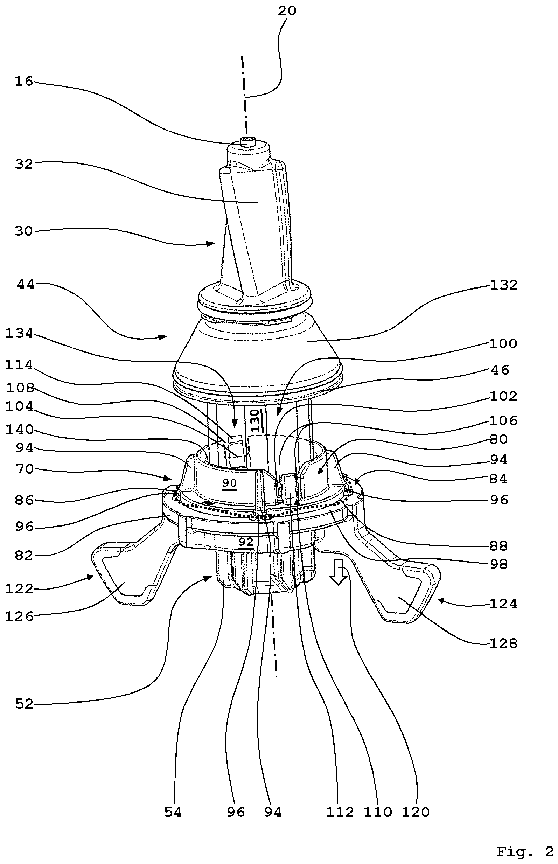

Um ein unkontrolliertes Auseinanderfallen von Lagereinheit 44, Kochbehälter 12 sowie der Verriegelungsmutter 70 im Zuge einer beispielsweise reinigungsbedingten (Teil-)Demontage des Multifunktionskochgeräts 10 durch den Benutzer zu vermeiden, weist die Verriegelungsmutter 70 erfindungsgemäß eine hier nicht dargestellte Sicherungseinrichtung auf (vgl. insb. Fig. 2 bis 5).

Die Figur 2 zeigt eine perspektivische Ansicht einer Lagereinheit mit aufgeschobener Verriegelungsmutter des Multifunktionskochgeräts von Fig. 1. In der Lagereinheit 44 ist die Welle 16 in Bezug zur Längsmittelachse 20 drehbar aufgenommen. Im Bereich des ersten Endabschnitts 30 der Welle 16 ist die Kopplungsgeometrie 32 ausgebildet. An dem zweiten Endabschnitt 52 der Welle 16 befindet sich die Eingriffsgeometrie 54 zum drehenden Antrieb der Welle 16.

Die Verriegelungsmutter 70 verfügt über einen im Wesentlichen hohlzylindrischen Grundkörper 80 mit einem radial auswärts gerichteten, umlaufenden und kreisringförmigen, scheibenartigen Kragen 82, in dem eine radial auswärts offene und der Lagereinheit 44 zugewandte Ringnut 84 vorgesehen ist. In der Ringnut 84 ist eine - hier lediglich zeichnerisch angedeutete - umlaufende Wellenfeder 86 angeordnet, die der besseren zeichnerischen Übersicht halber nicht bezeichnete vier Wellenberge und vier Wellentäler, aufweist. Eine hiervon abweichende Anzahl von Wellenbergen und Wellentälern ist gleichfalls möglich. Die Wellenfeder 86 verfügt über eine kreisringförmige Gestalt mit einer rechteckförmigen Querschnittsgeometrie. Die radiale Lagesicherung der Wellenfeder 86 erfolgt mittels eines durch die Ringnut 84 gebildeten, umlaufenden Absatzes 88 des Kragens 82 und eines Nutgrundes 98 der Ringnut 84. Der Absatz 88 stellt die eine Nutwand der im Übrigen radial auswärts offenen Ringnut 84 dar. Oberhalb des Kragens 82 verläuft ein erster Grundkörperabschnitt 90 und unterhalb des Kragens 82 ist ein zweiter Grundkörperabschnitt 92 ausgeformt. Die Grundkörperabschnitte 90, 92 der Verriegelungsmutter 70 sind näherungsweise hohlzylindrisch ausgebildet. Der Kragen 82 der Verriegelungsmutter 70 ist hier beispielhaft mit vier radial auswärts gerichteten Rippen gegen den ersten Grundkörperabschnitt 90 zur Verstärkung abgestützt, wobei von den Rippen lediglich die drei sichtbaren Rippen 94 bezeichnet sind. Die axiale Lagesicherung der Wellenfeder 86 erfolgt mit Hilfe von hier vier fußseitigen, radial auswärts gerichteten, kleinen Fortsätzen 96 der Rippen 94, die jeweils geringfügig über den Absatz 88 hinausragen. Die Rippen 94 sind bevorzugt umfangsseitig gleichmäßig zueinander beabstandet ausgeformt. Durch die fußseitigen Fortsätze 96 an den Rippen 94, die zudem geringfügig beabstandet zu einem Nutgrund 98 der Ringnut 84 ausgebildet sind, entstehen vier, der besseren zeichnerischen Übersicht halber nicht bezeichnete Aussparungen, die der axialen Lagefixierung der Wellenfeder 86 innerhalb der Ringnut 84 der Verriegelungsmutter 70 dienen. Aufgrund einer leichten Anschrägung der Fortsätze 96 und der Rippen 94 lässt sich die Wellenfeder 86 ausgehend von dem ersten Grundkörperabschnitt 90 bis zur Anlage an den Nutgrund 98 der Ringnut 84 des Kragens 82 der Verriegelungsmutter 70 axial rastend aufschieben.

An einem mittleren Gehäuseabschnitt 100 der bevorzugt mit einem metallischen Material gefertigten Lagereinheit 44 sind ein erster und ein zweiter Vorsprung 102, 104 diametral zueinander ausgebildet. Die beiden Vorsprünge 102, 104 der Lagereinheit 44 sind darüber hinaus jeweils radial nach außen orientiert.

Erfindungsgemäß weist die Verriegelungsmutter 70 eine Sicherungseinrichtung 110 auf, die mit einem ersten und einem zweiten Haken 112, 114 realisiert ist, die einander gegenüberliegend im Bereich des ersten Grundkörperabschnitts 90 der Verriegelungsmutter 70 ausgeformt sind. Die beiden axial verlaufenden Haken 112, 114 der Verriegelungsmutter 70 sind radial auswärts elastisch federnd ausgebildet und zu diesem Zweck durch rechteckige Aussparungen 106, 108 innerhalb des ersten Grundkörperabschnitts 90 der Verriegelungsmutter 70 zungenartig freigestellt.

In dem hier illustrierten Haltezustand zwischen der Verriegelungsmutter 70 und der Lagereinheit 44 hintergreift der erste Haken 112 den ersten Vorsprung 102 und der zweite Haken 114 hintergreift entsprechend den zweiten Vorsprung 104, so dass die Lagereinheit 44 und die Verriegelungsmutter 70 gegen ein unkontrolliertes Auseinanderfallen zuverlässig gesichert sind. Zur vollständigen Demontage ist es ausreichend, die Verriegelungsmutter 70 in Richtung des weißen Pfeils 120 von der Lagereinheit 44 abzuziehen. Hierbei ist nur die moderate Haltewirkung der radial auswärts elastisch federnden Haken 112, 114 zu überwinden.

Zum Verdrehen sowie zum axialen Abziehen der Verriegelungsmutter 70 verfügt diese weiterhin über ein erstes und ein zweites Betätigungsorgan 122, 124, die hier exemplarisch als ergonomisch flossenartig vergrößerte Betätigungsflügel 126, 128 realisiert sind.

Die Verriegelungsmutter 70 ist bevorzugt mit einem thermoplastischen und/oder duroplastischen Kunststoff gefertigt, der gegebenenfalls eine Faserarmierung zur Verstärkung aufweisen kann. Dasselbe gilt für die wellenseitige, schraubenartige komplexe Kopplungsgeometrie 32 der Welle 16.

Ein im Wesentlichen zylindrisches, massives Gehäuse 130 der Lagereinheit 44 weist oberhalb seines mittleren Gehäuseabschnitts 100 einen Kegelstumpfabschnitt 132 auf. Die beiden diametralen Vorsprünge 102, 104 sind in einem, von dem Kegelstumpfabschnitt 132 axial weggerichteten Verriegelungsabschnitt 134 der Lagereinheit 44 positioniert. Unterhalb des flanschartigen Kegelstumpfabschnitts 132 der Lagereinheit 44 liegt ferner das Dichtelement 46 an. Zur Durchführung des mittleren Gehäuseabschnitts 100 der Lagereinheit 44 verfügt der Grundkörper 80 der Verriegelungsmutter 70 über eine im Wesentlichen zylindrische Durchführung 140.

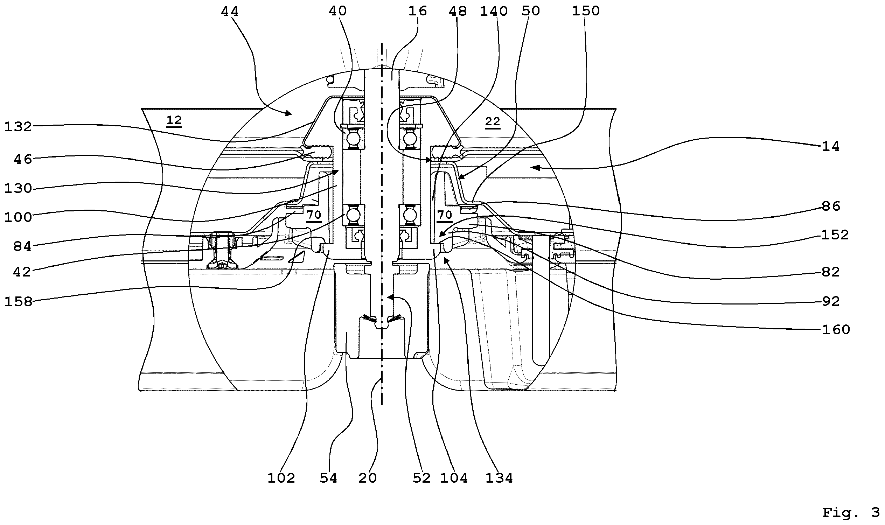

Die Figuren 3 bis 5 - auf die im weiteren Fortgang zugleich Bezug genommen wird - illustrieren jeweils einen Längsschnitt durch das Multifunktionsgerät im Bereich des Ausschnitts II von Fig. 1 in einem Verriegelungszustand, in einem Entriegelungszustand und in einem Haltezustand.

Die Lagereinheit 44 mit der in den beiden Lagerstellen 40, 42 drehbar aufgenommenen, metallischen Welle 16 ist in dem hier illustrierten Verriegelungszustand in Fig. 3 mittels der Verriegelungsmutter 70 innerhalb der Aussparung 48 der becherartigen Vertiefung 50 des Schichtbodens 14 des Kochbehälters 12 arretiert. Die Aussparung 48 in dem Schichtboden 14 sowie eine Außenumfangsgeometrie des mittleren Gehäuseabschnitts 100 der Lagereinheit 44 können so ausgebildet sein, dass die Lagereinheit 44 innerhalb der Aussparung 48 verdrehgesichert ist und ein Mitdrehen der Lagereinheit 44 beim Arretieren mittels der Verriegelungsmutter 70 unterbleibt. Die Abdichtung des Innenraums 22 des Kochbehälters 12 gegenüber dem Schichtboden 14 erfolgt mittels des kreisringförmigen Dichtelements 46. Die Lagereinheit 44 mit der Welle 16, die Aussparung 48 des Schichtbodens 14 des Kochbehälters 12 sowie die Verriegelungsmutter 70 sind jeweils im Wesentlichen zentrisch zu der Längsmittelachse 20 positioniert.

An dem zweiten Endabschnitt 52 der Welle 16 ist die Eingriffsgeometrie 54 für den drehenden Antrieb mittels der elektrischen Antriebseinheit befestigt (vgl. insb. Fig. 1).

Das massive metallische Gehäuse 130 der Lagereinheit 44 weist den im Wesentlichen hohlzylindrischen mittleren Gehäuseabschnitt 100 auf, an den sich der oberhalb des Schichtbodens 14 liegende Kegelstumpfabschnitt 132 und der unterhalb des Schichtbodens 14 befindliche Verriegelungsabschnitt 134 mit den beiden radial nach außen gerichteten sowie diametral ausgebildeten Vorsprüngen 102, 104 anschließen. Der mittlere Gehäuseabschnitt 100 der Lagereinheit 44 verläuft axial durch die bohrungsartige Durchführung 140 der Verriegelungsmutter 70. Innerhalb der Ringnut 84 in dem Kragen 82 der Verriegelungsmutter 70 liegt die Wellenfeder 86, die zwischen dem Kragen 82 und einer die becherartige Vertiefung 50 koaxial umschließenden, kreisringförmigen Schulter 150 des Schichtbodens 14 in dem hier gegebenen Verriegelungszustand bevorzugt axial vorgespannt ist.

Die Verriegelung zwischen der Lagereinheit 44 und der Verriegelungsmutter 70 erfolgt hier lediglich exemplarisch mittels einer Bajonettverbindung 152. Die Bajonettverbindung 152 besteht hierbei zwischen den beiden integralen Vorsprüngen 102, 104 der Lagereinheit 44 und einer ersten und zweiten Haltenut 158, 160 im Bereich des zweiten Grundkörperabschnitts 92 der Verriegelungsmutter 70. Die beiden Haltenuten 158, 160 sind diametral in der Verriegelungsmutter 70 ausgebildet und weisen jeweils eine bogenförmige bzw. kreisringsektorförmige Geometrie auf.

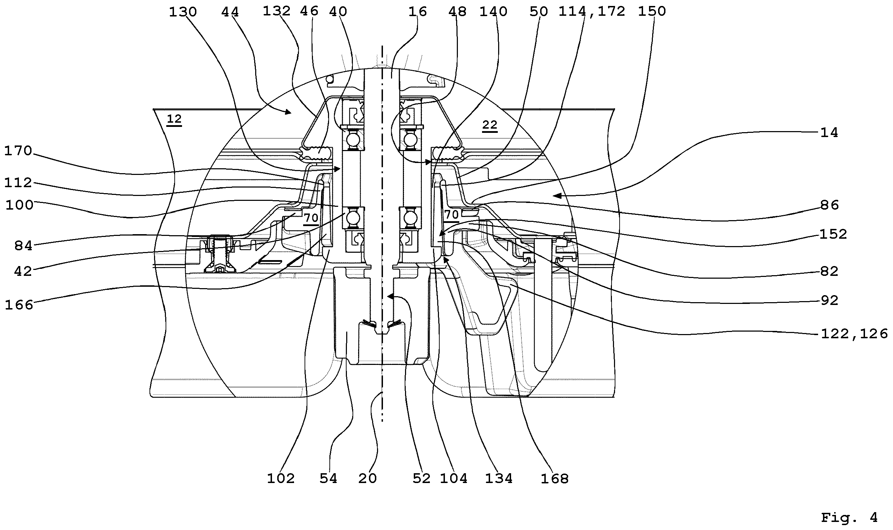

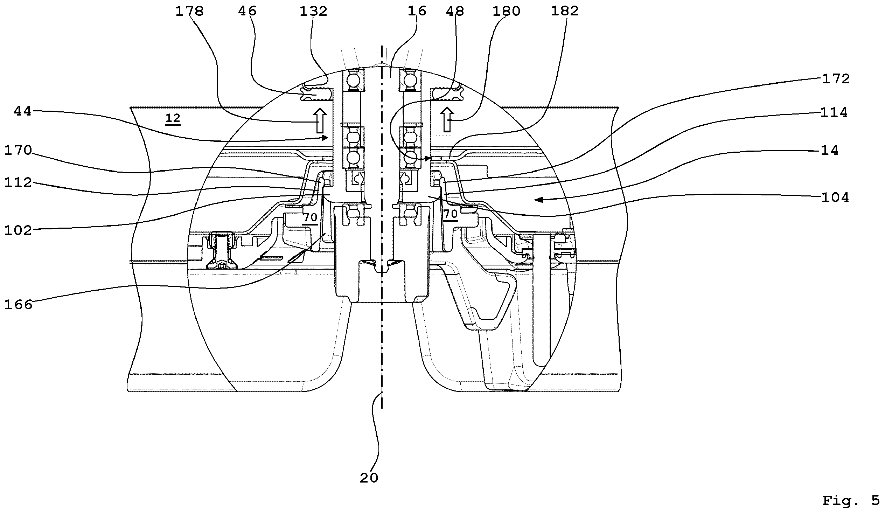

Der Übergang zwischen dem Verriegelungszustand von Fig. 3 und einem Entriegelungszustand bzw. einem Haltezustand nach Maßgabe der Fig. 4, 5 und umgekehrt erfolgt durch das Verdrehen der Verriegelungsmutter 70 um die Längsmittelachse 20 im Uhrzeigersinn oder im Gegenuhrzeigersinn um jeweils etwa 45°. Im Übrigen ist der konstruktive Aufbau einer Bajonettverbindung einem auf dem Gebiet der Konstruktion von Küchenmaschinen tätigen Fachmann hinreichend geläufig, sodass auf eine eingehendere Erläuterung der konstruktiven Details der Bajonettverbindung 152 verzichtet werden kann.

In dem Entriegelungszustand nach Maßgabe von Fig. 4 ist die Verriegelungsmutter 70 so weit um die Längsmittelachse 20 verdreht, dass der erste Vorsprung 102 im Bereich einer ersten Längsnut 166 und der zweite Vorsprung 104 im Bereich einer zweiten Längsnut 168 der Verriegelungsmutter 70 und damit im Bereich der beiden Haken 112, 114 liegt. Die Längsnuten 166, 168 stellen hierbei eine axiale Verlängerung der, den Haken 112, 114 jeweils zugeordneten, rechteckförmigen Aussparungen (vgl. insb. Fig. 2; Bezugsziffern 106, 108) des ersten Grundkörperabschnitts 90 des Grundkörpers 80 der Verriegelungsmutter 70 dar. In der Entriegelungsposition von Fig. 4 können die Lagereinheit 44 und die Verriegelungsmutter 70 so weit in axialer Richtung auseinander gezogen werden, bis ein erster Rastvorsprung 170 des Hakens 112 den ersten Vorsprung 102 und ein zweiter Rastvorsprung 172 des zweiten Hakens 114 den zweiten Vorsprung 104 der Lagereinheit 44 hintergreifen und der so genannte Haltezustand (vgl. insb. Fig. 5) erreicht ist. Erst nachdem die von den radial nach außen federelastischen Haken 112, 114 bewirkte Haltekraft überwunden ist, kann die Verriegelungsmutter 70 vollständig und kontrolliert von dem Benutzer von der Lagereinheit 44 abgezogen werden.

Das Verdrehen sowie die axiale Verschiebebewegung der Verriegelungsmutter 70 erfolgt durch den Benutzer mit Hilfe der als Betätigungsflügel ausgebildeten Betätigungsorgane, wobei in den Fig. 4, 5 lediglich das erste Betätigungsorgan 122 bzw. der erste Betätigungsflügel 126 dargestellt ist.

Durch die beiden Haken 112, 114 der Verriegelungsmutter 70, die die Vorsprünge 102, 104 der Lagereinheit 44 hintergreifen, wird erfindungsgemäß ein unkontrolliertes Auseinanderfallen von Lagereinheit 44 und Verriegelungsmutter 70 bei der Demontage des Multifunktionskochgeräts, zum Beispiel im Zuge von Reinigungsarbeiten des Benutzers an dem Multifunktionskochgerät, ausgeschlossen. Eine mechanische Vorspannung der Wellenfeder 86 ist hierbei bevorzugt so bemessen, dass die Lagereinheit 44 und die Verriegelungsmutter 70 zumindest im Entriegelungszustand soweit axial voneinander beabstandet sind, dass die Wellenfeder 86 idealerweise vollständig entspannt ist.

In dem Haltezustand von Fig. 5 ist die Lagereinheit 44 ausgehend vom Entriegelungszustand nach Fig. 4 axial so weit aus der Aussparung 48 in dem Schichtboden 14 des Kochbehälters 12 - wie mit den beiden Pfeilen 178, 180 angedeutet - herausgezogen, dass die Rastvorsprünge 170, 172 der Haken 112, 114 der Verriegelungsmutter 70 die Vorsprünge 102, 104 der Lagereinheit 44 hintergreifen und die beabsichtigte Sicherung der Lagereinheit 44 und der Verriegelungsmutter 70 gegen unkontrolliertes Auseinanderfallen gegeben ist. Das unterseitige Dichtelement 46 des Kegelstumpfabschnitts 132 der Lagereinheit 44 ist hierbei vollständig von dem Schichtboden 14 bzw. dessen metallischer Innenlage 182 abgehoben. Die umfangsseitige Position der Verriegelungsmutter 70 bleibt beim Übergang vom Entriegelungszustand in den Haltezustand unverändert, während sich ein nicht bezeichneter axialer Abstand zwischen den beiden Vorsprüngen 102, 104 der Lagereinheit 44 und den Rastvorsprüngen 170, 172 an den beiden Haken 112, 114 der Verriegelungsmutter 70 ausweislich der Fig. 4, 5 bis auf null reduziert.

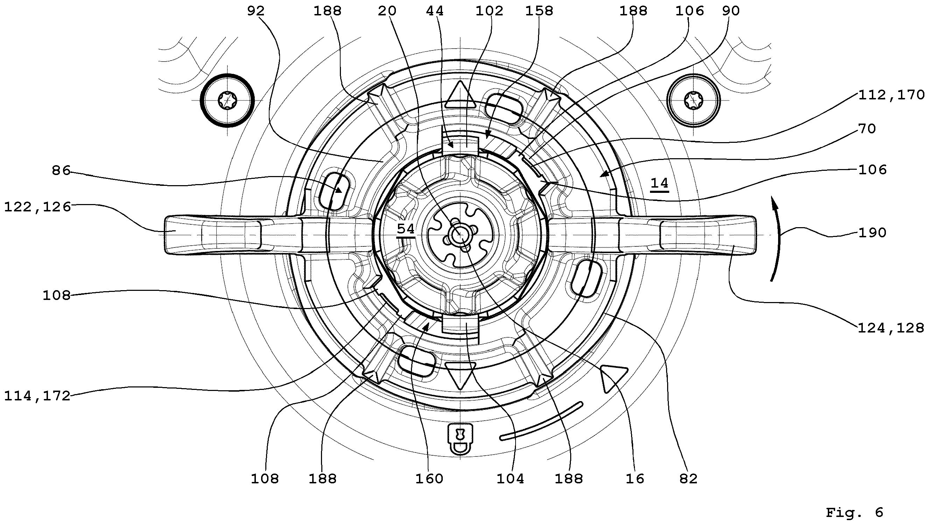

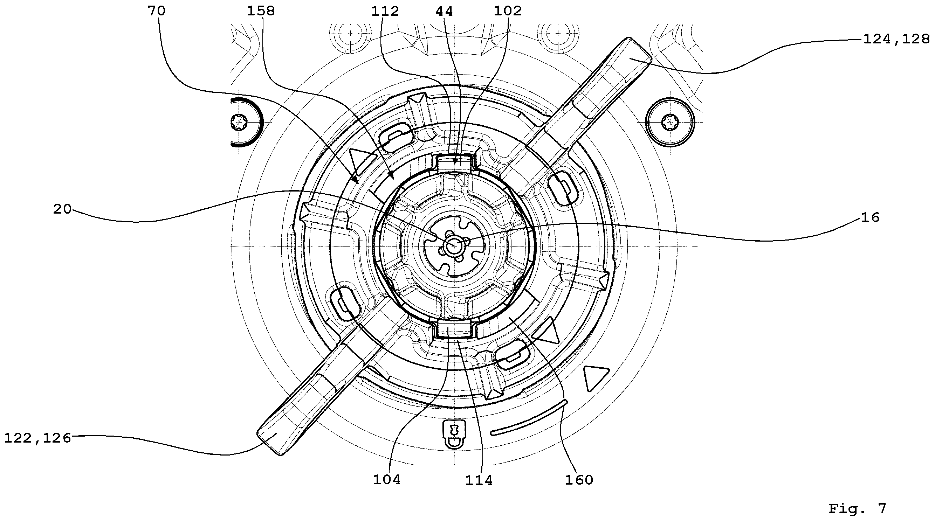

Die Fig. 6 illustriert eine Draufsicht auf die Verriegelungsmutter im Verriegelungszustand von Fig. 3. Die in den Schichtboden 14 eingesetzte Verriegelungsmutter 70 weist die zwei diametral angeordneten Betätigungsorgane 122, 124 auf, die hier jeweils als ein für den Benutzer ergonomisch vergrößerter Betätigungsflügel 126, 128 ausgeführt sind. Zwischen dem zweiten Grundkörperabschnitt 92 und dem Kragen 82 der Verriegelungsmutter 70 sind hier vier, radial auswärts gerichtete Verstärkungsrippen 188 vorgesehen, die umfangsseitig zueinander und unter gedachter Einbeziehung der Betätigungsflügel 126, 128 gleichmäßig zueinander beabstandet und integral zur Verriegelungsmutter 70 ausgeformt sind. Die Vorsprünge 102, 104 der Lagereinheit 44 liegen in den bogenförmigen bzw. kreisringsektorförmigen Haltenuten 158, 160 der Verriegelungsmutter 70 und sind hierdurch mit diesen verriegelt. Die beiden Haken 112, 114 der Verriegelungsmutter 70 und die an den Haken 112, 114 ausgebildeten, radial einwärts gerichteten Rastvorsprünge 170, 172 gehen somit frei. Dadurch, dass die Haken 112, 114 in den Aussparungen 106, 108 des ersten Grundköperabschnitts 90 der Lagereinheit 44 beidseits freigeschnitten sind, können die Haken 112, 114 im Bedarfsfall leichtgängig radial auswärts federn, sodass die Verriegelungsmutter 70 in dem Haltezustand von dem Benutzer von der Lagereinheit 44 abgezogen werden kann. Die hier weitgehend verdeckte Wellenfeder 86 drückt hierbei die Verriegelungsmutter 70 von dem Schichtboden 14 weg, das heißt hier aus der Zeichenebene heraus, so dass der Übergang vom Entriegelungszustand in den Haltezustand der Verriegelungsmutter 70 in einer für den Benutzer haptisch eindeutig wahrnehmbaren Weise unterstützt wird. Zum Wechseln in den Entriegelungszustand bzw. in den Haltezustand der Verriegelungsmutter 70 gemäß Fig. 7, ist es notwendig, diese in Richtung des schwarzen Pfeils 190 um die Längsmittelachse 20 der metallischen Welle 16 um etwa 45° unter Zuhilfenahme der beiden Betätigungsflügel 126, 128 zu verdrehen (vgl. insb. Fig. 7).

Die Fig. 7 zeigt eine Draufsicht auf die Verriegelungsmutter im Entriegelungs- bzw. Haltezustand von Fig. 4, 5. In dem Entriegelungs- bzw. Haltezustand von Fig. 7 liegen die Vorsprünge 102, 104 nicht mehr in den bogenförmigen Haltenuten 158, 160 der Verriegelungsmutter 70, sondern sind bis in den Bereich der Haken 112, 114 verschwenkt und werden von diesen zumindest im Haltezustand in ihrer Axialposition gehalten, bis der Benutzer die Verriegelungsmutter 70 von der Lagereinheit 44 aus der Zeichenebene heraus zieht. Die verdrehende und axial schiebende Betätigung der Verriegelungsmutter durch den Benutzer erfolgt hierbei mittels der als Betätigungsflügel 126, 128 ausgebildeten Betätigungsorgane 122, 124 der Verriegelungsmutter 70.

Die Erfindung betrifft ein Multifunktionskochgerät (10) mit einem Kochbehälter (12), wobei eine metallische Welle (16) durch einen Schichtboden (14) des Kochbehälters (12) geführt ist und an einem in Richtung einer Öffnung (24) des Kochbehälters (12) weisenden ersten Endabschnitt (30) der metallischen Welle eine Kopplungsgeometrie (32) vorgesehen ist, die zur Herstellung einer lösbaren und drehfesten Verbindung mit einer Vielzahl von austauschbaren Aufsätzen (36) unterschiedlicher Art zur Bearbeitung von Nahrungsmitteln ausgebildet ist und die metallische Welle (16) in einer mindestens zwei Lagerstellen (40, 42) aufweisenden Lagereinheit (44) drehbar und gedichtet aufgenommen ist, wobei die Lagereinheit (44) in einer zentrischen Aussparung (48) einer becherartigen Vertiefung (50) des Schichtbodens (14) mittels einer Verriegelungsmutter (70) befestigbar ist und an einem zweiten, von dem ersten Endabschnitt weggerichteten Endabschnitt (52) der metallischen Welle (16) eine Eingriffsgeometrie (54) zum drehenden Antrieb durch eine elektrische Antriebseinheit (56) ausgebildet ist. Erfindungsgemäß ist vorgesehen, dass die Verriegelungsmutter (70) eine Sicherungseinrichtung (110) aufweist, die dazu ausgebildet ist, die Verriegelungsmutter (70) sowie die Lagereinheit (44) nach dem Aufheben eines Verriegelungszustands der Verriegelungsmutter (70) vor einem unkontrollierten Abfallen vom Schichtboden (14) des Kochbehälters (12) zu sichern. Infolgedessen können die Lagereinheit (44), die Verriegelungsmutter (70) sowie der Kochbehälter (12) bei einer beispielsweise zu Reinigungszwecken notwendigen Teildemontage des Multifunktionskochgeräts (10) nicht unkontrolliert auseinanderfallen.

### Bezugszeichenliste

- 10: Multifunktionskochgerät
- 12: Kochbehälter
- 14: Schichtboden
- 16: metallische Welle
- 20: Längsmittelachse
- 22: Innenraum (Kochbehälter)
- 24: Öffnung (Kochbehälter)
- 30: erster Endabschnitt (Welle)
- 32: wellenseitige Kopplungsgeometrie
- 34: aufsatzseitige Kopplungsgeometrie
- 36: Aufsatz
- 38: mechanische Kupplung
- 40: erste Lagerstelle
- 42: zweite Lagerstelle
- 44: Lagereinheit
- 46: Dichtelement
- 48: Aussparung
- 50: becherartige Vertiefung
- 52: zweiter Endabschnitt (Welle)
- 54: Eingriffsgeometrie
- 56: elektrische Antriebseinheit
- 58: Gehäuse (Multifunktionskochgerät)
- 60: Abtriebsgeometrie
- 62: mechanische Kupplung
- 64: mechanisches Getriebe
- 66: Ausrichtelement
- 68: Ausrichtelement
- 70: Verriegelungsmutter
- 80: hohlzylindrischer Grundkörper (Verriegelungsmutter)
- 82: Kragen
- 84: Ringnut
- 86: Wellenfeder
- 88: Absatz
- 90: erster Grundkörperabschnitt (Verriegelungsmutter)
- 92: zweiter Grundkörperabschnitt (Verriegelungsmutter)
- 94: fußseitige Rippe
- 96: Fortsatz (Rippe)
- 98: Nutgrund
- 100: mittlerer Gehäuseabschnitt (Lagereinheit)
- 102: erster Vorsprung (Lagereinheit)
- 104: zweiten Vorsprung (Lagereinheit)
- 106: erste Aussparung (Haken)
- 108: zweite Aussparung (Haken)
- 110: Sicherungseinrichtung
- 112: erster Haken
- 114: zweiter Haken
- 120: Pfeil
- 122: erstes Betätigungsorgan
- 124: zweites Betätigungsorgan
- 126: erster Betätigungsflügel
- 128: zweiter Betätigungsflügel
- 130: Gehäuse (Lagereinheit)
- 132: Kegelstumpfabschnitt (Lagereinheit)
- 134: Verriegelungsabschnitt (Lagereinheit)
- 140: Durchführung (Grundkörper Verriegelungsmutter)
- 150: Schulter (Vertiefung Schichtboden)
- 152: Bajonettverbindung
- 158: erste Haltenut (Verriegelungsmutter)
- 160: zweite Haltenut (Verriegelungsmutter)
- 166: erste Längsnut (Verriegelungsmutter)
- 168: zweite Längsnut(Verriegelungsmutter)
- 170: erster Rastvorsprung
- 172: zweiter Rastvorsprung
- 178: Pfeil
- 180: Pfeil
- 182: Innenlage (Schichtboden)
- 188: Verstärkungsrippe (Verriegelungsmutter)
- 190: schwarzer Pfeil
- M: Elektromotor

## Patentansprüche

1. Multifunktionskochgerät (10) mit einem Kochbehälter (12), wobei eine metallische Welle (16) durch einen Schichtboden (14) des Kochbehälters (12) geführt ist und an einem in Richtung einer Öffnung (24) des Kochbehälters (12) weisenden ersten Endabschnitt (30) der metallischen Welle eine Kopplungsgeometrie (32) vorgesehen ist, die zur Herstellung einer lösbaren und drehfesten Verbindung mit einer Vielzahl von austauschbaren Aufsätzen (36) unterschiedlicher Art zur Bearbeitung von Nahrungsmitteln ausgebildet ist und die metallische Welle (16) in einer mindestens zwei Lagerstellen (40, 42) aufweisenden Lagereinheit (44) drehbar und gedichtet aufgenommen ist, wobei die Lagereinheit (44) in einer zentrischen Aussparung (48) einer becherartigen Vertiefung (50) des Schichtbodens (14) mittels einer Verriegelungsmutter (70) befestigbar ist und an einem zweiten, von dem ersten Endabschnitt weggerichteten Endabschnitt (52) der metallischen Welle (16) eine Eingriffsgeometrie (54) zum drehenden Antrieb durch eine elektrische Antriebseinheit (56) ausgebildet ist, **dadurch gekennzeichnet, dass** die Verriegelungsmutter (70) eine Sicherungseinrichtung (110) aufweist, die dazu ausgebildet ist, die Verriegelungsmutter (70) sowie die Lagereinheit (44) nach dem Aufheben eines Verriegelungszustands der Verriegelungsmutter (70) vor einem unkontrollierten Abfallen vom Schichtboden (14) des Kochbehälters (12) zu sichern.

2. Multifunktionskochgerät (10) nach Patentanspruch 1, **dadurch gekennzeichnet, dass** die Sicherungseinrichtung (110) mindestens zwei Haken (112, 114) aufweist, wobei die Haken (112, 114) zum Ermöglichen des endgültigen axialen Abziehens der Verriegelungsmutter von der Lagereinheit (44) radial nach außen elastisch federnd ausgebildet sind.

3. Multifunktionskochgerät (10) nach Patentanspruch 1 oder 2, **dadurch gekennzeichnet, dass** jeder Haken (112, 114) in einem Haltezustand der Verriegelungsmutter (70) jeweils einen radial auswärts gerichteten Vorsprung (102, 104) der Lagereinheit (44) hintergreift.

4. Multifunktionskochgerät (10) nach Patentanspruch 3, **dadurch gekennzeichnet, dass** die mindestens zwei Haken (112, 114) jeweils einen radial einwärts orientierten keilförmigen Rastvorsprung (170, 172) aufweisen.

5. Multifunktionskochgerät (10) nach einem der Patentansprüche 1 bis 4, **dadurch gekennzeichnet, dass** ein radial auswärts gerichteter Kragen (82) der Verriegelungsmutter (70) eine radial auswärts offene und der Lagereinheit (44) zugewandte Ringnut (84) aufweist, in der eine Wellenfeder (86) angeordnet ist.

6. Multifunktionskochgerät (10) nach Patentanspruch 5, **dadurch gekennzeichnet, dass** die Wellenfeder (86) in einem Verriegelungszustand der Verriegelungsmutter (70) axial vorgespannt ist und sich zwischen der Ringnut (84) des Kragens (82) und einer die becherartige Vertiefung (50) koaxial umschließenden Schulter (150) des Schichtbodens (14) abstützt.

7. Multifunktionskochgerät (10) nach einem der Patentansprüche 1 bis 6, **dadurch gekennzeichnet, dass** die Lagereinheit (44) und die Verriegelungsmutter (70) mittels einer Bajonettverbindung (152) miteinander verbindbar sind.

8. Multifunktionskochgerät (10) nach Patentanspruch 7, **dadurch gekennzeichnet, dass** die Verriegelungsmutter (70) zwei zueinander diametrale sowie bogenförmige Haltenuten (158, 160) zur Aufnahme der Vorsprünge (102, 104) der Lagereinheit (44) aufweist.

9. Multifunktionskochgerät (10) nach Patentanspruch 7 oder 8, **dadurch gekennzeichnet, dass** die Lagereinheit (44) bevorzugterweise verdrehsicher in der Aussparung (48) im Schichtboden (14) des Kochbehälters (12) aufgenommen ist.

10. Multifunktionskochgerät (10) nach einem der Patentansprüche 1 bis 9, **dadurch gekennzeichnet, dass** an der Verriegelungsmutter (70) mindestens zwei Betätigungsorgane (122, 124), insbesondere zwei radial auswärts gerichtete Betätigungsflügel (126, 128), zur dreh- und schiebeweisen Betätigung der Verriegelungsmutter (70), integral ausgeformt sind.

11. Multifunktionskochgerät (10) nach einem der Patentansprüche 1 bis 10, **dadurch gekennzeichnet, dass** die Kopplungsgeometrie (32) im Bereich des ersten Endabschnitts (30) der metallischen Welle (16) mit einem Kunststoff gebildet ist.

## Claims

1. Multifunction cooking appliance (10) with a cooking container (12), wherein a metallic shaft (16) is guided through a bottom layer (14) of the cooking container (12) and a coupling geometry (32) is provided on a first end section (30) of the metallic shaft which points in the direction of an opening (24) of the cooking container (12), said coupling geometry being embodied to establish a detachable and torque proof connection with a plurality of exchangeable attachments (36) of a different type in order to process foodstuff and the metallic shaft (16) is received in a storage unit (44) in a rotatable and sealed manner, said storage unit (44) having at least two bearing points (40, 42), wherein the storage unit (44) can be fastened in a central cut-out (48) of a cup-type depression (50) of the bottom layer (14) by means of a locking nut (70) and an engaging geometry (54) for rotationally driving by means of an electric drive unit (56) is embodied on a second end section (52) of the metallic shaft (16) which is directed away from the first end section, **characterised in that** the locking nut (70) has a securing device (110) which is embodied, after cancelling a locking state of the locking nut (70), to safeguard the locking nut (70) and the storage unit (44) against an uncontrolled drop from the bottom layer (14) of the cooking container (12).

2. Multifunction cooking appliance (10) according to claim 1, **characterised in that** the securing device (110) has at least two hooks (112, 114), wherein the hooks (112, 114) are embodied to be elastically resilient radially outwards in order to enable the final axial detachment of the locking nut from the storage unit (44).

3. Multifunction cooking appliance (10) according to claim 1 or 2, **characterised in that** in one holding state of the locking nut (70), each hook (112, 114) engages in each case behind a radially upwardly directed projection (102, 104) of the storage unit (44).

4. Multifunction cooking appliance (10) according to claim 3, **characterised in that** the at least two hooks (112, 114) have in each case a radially inwardly oriented wedge-shaped locking projection (170, 172).

5. Multifunction cooking appliance (10) according to one of claims 1 to 4, **characterised in that** a radially outwardly directed collar (82) of the locking nut (70) has an annular groove (84) which opens radially outward and faces the storage unit (44), in which annular groove a wave spring (86) is arranged.

6. Multifunction cooking appliance (10) according to claim 5, **characterised in that** the wave spring (86) is pretensioned axially in a locking state of the locking nut (70) and is supported between the annular groove (84) of the collar (82) and a shoulder (150) of the bottom layer (14) which coaxially surrounds the cup-type depression (50).

7. Multifunction cooking appliance (10) according to one of claims 1 to 6, **characterised in that** the storage unit (44) and the locking nut (70) can be connected to one another by means of a bayonet connection (152).

8. Multifunction cooking appliance (10) according to claim 7, **characterised in that** the locking nut (70) has two arch-shaped retaining grooves (158, 160) which are diametrical to one another for receiving the projections (102, 104) of the storage unit (44).

9. Multifunction cooking appliance (10) according to claim 7 or 8, **characterised in that** the storage unit (44) is preferably received in a torsion-proof manner in the cut-out (48) in the bottom layer (14) of the cooking container (12).

10. Multifunction cooking appliance (10) according to one of the claims 1 to 9, **characterised in that** at least two actuating organs (122, 124), in particular two actuating blades (126, 128) directed radially outwards, are moulded integrally on the locking nut (70) in order to actuate the locking nut (70) in a rotational and sliding manner.

11. Multifunction cooking appliance (10) according to one of claims 1 to 10, **characterised in that** the coupling geometry (32) is formed in the region of the first end section (30) of the metallic shaft (16) with a plastic.

## Revendications

1. Appareil de cuisson multifonctions (10) comprenant un récipient de cuisson (12), dans lequel un arbre métallique (16) est guidé à travers un fond en couches (14) du récipient de cuisson (12) et une géométrie d'accouplement (32) est agencée au niveau d'une première partie d'extrémité (30) de l'arbre métallique orientée en direction d'une ouverture (24) du récipient de cuisson (12), laquelle est configurée pour produire une connexion fixe en rotation et détachable avec une pluralité d'accessoires interchangeables (36) de différent type pour traiter des denrées alimentaires et l'arbre métallique (16) est reçu de façon à pouvoir tourner et de façon serrée dans un ensemble de paliers (44) comprenant au moins deux points d'appui (40, 42),
dans lequel l'ensemble de paliers (44) peut être fixé dans un évidement centré (48) d'un creux en forme de godet (50) du fond en couches (14) au moyen d'un écrou de blocage (70) et,
au niveau d'une deuxième partie d'extrémité (52) de l'arbre métallique (16) orientée à l'opposé de la première partie d'extrémité, une géométrie d'engrènement (54) est configurée pour un entraînement rotatif par un organe d'entraînement électrique (56), **caractérisé en ce que** l'écrou de blocage (70) comprend un dispositif de sécurité (110), qui est configuré pour sécuriser l'écrou de blocage (70) ainsi que l'ensemble de paliers (44), après la suppression d'un état de blocage de l'écrou de blocage (70), contre un détachement incontrôlé du fond en couches (14) du récipient de cuisson (12).

2. Appareil de cuisson multifonctions (10) selon la revendication 1, **caractérisé en ce que** le dispositif de sécurité (110) comprend au moins deux crochets (112, 114), dans lequel les crochets (112, 114) sont configurés avec une élasticité de ressort radialement vers l'extérieur pour permettre un démontage axial définitif de l'écrou de blocage de l'ensemble de paliers (44).

3. Appareil de cuisson multifonctions (10) selon la revendication 1 ou 2, **caractérisé en ce que** chaque crochet (112, 114), dans un état de maintien de l'écrou de blocage (70), enserre par l'arrière respectivement une partie saillante orientée radialement vers l'extérieur (102, 104) de l'ensemble de paliers (44).

4. Appareil de cuisson multifonctions (10) selon la revendication 3, **caractérisé en ce que** les au moins deux crochets (112, 114) comprennent respectivement une saillie d'encliquetage (170, 172) en forme de coin orientée radialement vers l'intérieur.

5. Appareil de cuisson multifonctions (10) selon l'une des revendications 1 à 4, **caractérisé en ce qu'**une collerette (82) de l'écrou de blocage (70) orientée radialement vers l'extérieur comprend une rainure annulaire (84) ouverte radialement vers l'extérieur et tournée vers l'ensemble de paliers (44), dans laquelle un ressort ondulé (86) est disposé.

6. Appareil de cuisson multifonctions (10) selon la revendication 5, **caractérisé en ce que** le ressort ondulé (86) est précontraint axialement dans un état de blocage de l'écrou de blocage (70) et s'appuie entre la rainure annulaire (84) de la collerette (82) et un épaulement (150) du fond en couches (14) entourant coaxialement le creux en forme de godet (50).

7. Appareil de cuisson multifonctions (10) selon l'une des revendications 1 à 6, **caractérisé en ce que** l'ensemble de paliers (44) et l'écrou de blocage (70) peuvent être assemblés entre eux au moyen d'une liaison à baïonnette (152).

8. Appareil de cuisson multifonctions (10) selon la revendication 7, **caractérisé en ce que** l'écrou de blocage (70) comprend deux rainures de retenue (158, 160) diamétralement opposées et en forme d'arc, permettant de recevoir les parties saillantes (102, 104) de l'ensemble de paliers (44).

9. Appareil de cuisson multifonctions (10) selon la revendication 7 ou 8, **caractérisé en ce que** l'ensemble de paliers (44) est reçu de préférence de façon solidaire en rotation dans l'évidement (48) dans le fond en couches (14) du récipient de cuisson (12).

10. Appareil de cuisson multifonctions (10) selon l'une des revendications 1 à 9, **caractérisé en ce qu'**au moins deux organes d'actionnement (122, 124), en particulier deux ailettes d'actionnement (126, 128) orientées radialement vers l'extérieur, sont formés d'un seul tenant sur l'écrou de blocage (70) pour permettre un actionnement de manière rotative et en poussée de l'écrou de blocage (70).

11. Appareil de cuisson multifonctions (10) selon l'une des revendications 1 à 10, **caractérisé en ce que** la géométrie d'accouplement (32) dans la région de la première partie d'extrémité (30) de l'arbre métallique (16) est constituée de matière plastique.
